# EUROPÄISCHE PATENTSCHRIFT

(11) **EP 1 200 809 B1**
(45) Veröffentlichungstag und Bekanntmachung des Hinweises auf die Patenterteilung: **01.10.2008**
(21) Anmeldenummer: 00949346.1
(22) Anmeldetag: 14.07.2000
(51) Int. Cl.: G01L 5/00

(54) **VORRICHTUNG ZUR MESSUNG DES ANPRESSDRUCKES EINES WICKLUNGSPRESSELEMENTS IN EINEM LEISTUNGSTRANSFORMATOR**
DEVICE FOR MEASURING THE CONTACT PRESSURE OF A WINDING PRESS ELEMENT IN AN OUTPUT TRANSFORMER
DISPOSITIF PERMETTANT DE MESURER LA PRESSION D'APPUI EXERCEE PAR UN ELEMENT D'APPUI SUR UN BOBINAGE DANS UN TRANSFORMATEUR POUR FORCE MOTRICE

(30) Priorität: 28.07.1999 DE 19935515
(43) Veröffentlichungstag der Anmeldung: 02.05.2002
(73) Patentinhaber: ABB AG, 68309 Mannheim (DE)
(72) Erfinder: FANTANA, Nicolaie, Laurentiu, D-69124 Leimen (DE); GASCH, Armin, D-69126 Heidelberg (DE); VOGEL, Albrecht, D-76297 Stutensee (DE)
(86) Internationale Anmeldenummer: PCT/EP2000/006742
(87) Internationale Veröffentlichungsnummer: WO 2001/009582

(56) Entgegenhaltungen:
- DE-A- 3 536 900

## Beschreibung

Die Erfindung bezieht sich auf eine Vorrichtung zur Messung des Anpreßdruckes, der in einem Leistungstransformator oder sonstigem starkstromtechnischem Gerät durch ein Wicklungspreßelement auf eine Wicklung ausgeübt wird.

Eine solche Vorrichtung wird in DE-A-35 36 900 offenbart.

Die Wicklungen insbesondere von Leistungstransformatoren sind aus einer Kombination von Leitern und Isolierstoffen zusammengebaut. Sie stellen eine komplexe Konstruktion mit grundsätzlich zylindrischer Geometrie dar. Die Wicklungen werden nach der Fertigung/Wicklung so angeordnet, daß sie vom Eisenkern des Transformators umschlossen werden.

Transformatorwicklungen müssen so ausgelegt sein, daß sie eine ausreichende mechanische Festigkeit und Stabilität aufweisen, um Kurzschlüssen und anderen mechanischen Kräften während der gesamten Lebensdauer des Transformators standzuhalten. Ein besonders wichtiger Aspekt ist die Pressung der Wicklungen, die eine gute mechanische Stabilität bewirkt.

Der durch die Pressung auf die Wicklungen des Transformators wirkende Druck verringert sich im Laufe der Zeit als Folge mehrfacher Einflüsse. Die Folgen sind dann eine oft unzureichende mechanische Festigkeit im Fall von Kurzschlüssen und eine erhöhte Wahrscheinlichkeit der Zerstörung des Transformators. Es sind keine in Transformatoren eingebauten Vorrichtungen bekannt, die es ermöglichen würden, Änderungen des Anpreßdruckes festzustellen.

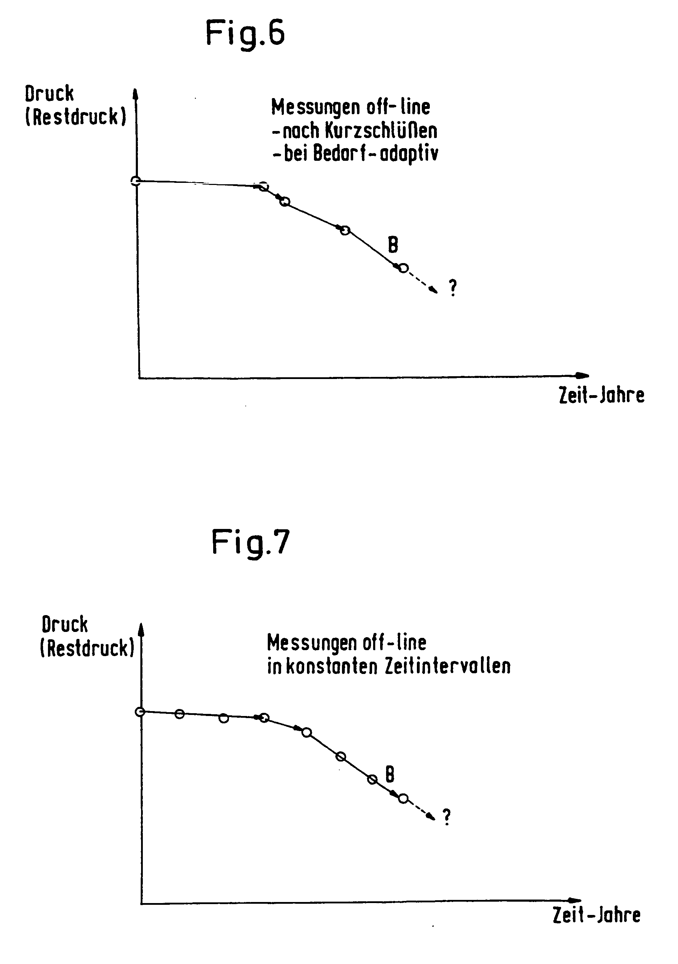

Fig. 6 zeigt beispielsweise einen typischen Verlauf des abnehmenden Anpreßdrukkes, der off-line jeweils nach einem aufgetretenen Kurzschluß ermittelt wurde. Fig. 7 zeigt einen Verlauf, der off-line in geplanten Zeitabständen erfaßt wurde.

Transformatorwicklungen werden üblicherweise während der Herstellung gepreßt. Eine Möglichkeit zur Feststellung einer Änderung während des Betriebs besteht nicht. Möglichkeiten einer Nachpressung zur Korrektur bestehen nur bei umfangreicheren Reparaturarbeiten, z.B. wenn eine Wicklungen erneuert werden_muß.

Selbst wenn Anordnungen benutzt werden, mit denen die Pressung mit mechanischen elastischen Elementen während der Betriebszeit in gewissem Maße nachgestellt wird, hat man grundsätzlich keine objektive Information über den tatsächlichen Ist-Zustand der Pressung der Wicklung, und somit keine Information über den Zustand des Transformators.

Der Erfindung liegt daher die Aufgabe zugrunde, eine Vorrichtung zur Messung des Anpreßdruckes eines Wicklungspreßelements in einem Leistungstransformator anzugeben.

Diese Aufgabe wird durch eine Vorrichtung zur Anpreßdruck-Messung mit den im Anspruch 1 angegebenen Merkmalen gelöst. Vorteilhafte Ausgestaltungen sind in weiteren Ansprüchen angegeben.

Die Vorrichtung ermöglicht es, jederzeit den gegebenen Anpreßdruck meßtechnisch zu erfassen, und damit auch den nach längerer Betriebszeit noch gegebenen Restanpreßdruck.

Eine weitere Erläuterung der Erfindung erfolgt nachstehend anhand von Ausführungsbeispielen, die in Zeichnungsfiguren dargestellt sind.

Es zeigen:
- Fig. 1: eine Prinzipdarstellung der in einem Leistungstransformator angeordneten Meßvorrichtung,
- Fig. 2: eine mögliche Anordnung eines Drucksensors zwischen Preßelementen und Anordnung von Antennen,
- Fig. 3: eine erste Ausführungsvariante einer Anordnung eines Sensorelements, wobei das Element in einem elastischen Verformungskörper angeordnet ist,
- Fig. 4: eine zweite Ausführungsvariante einer Anordnung eines Sensorelements, wobei das Sensorelement in einem Federelement angeordnet ist,
- Fig. 5: eine Antennenanordnung,
- Fig. 6: einen typischen Verlauf des Anpreßdruckes eines Wicklungspreßelements, der off-line punktweise jeweils nach einem Kurzschluß erfaßt wurde,
- Fig. 7: einen typischen Verlauf des Anpreßdruckes, der in konstanten Zeitintervallen erfaßt wurde,
- Fig. 8: einen mit einer erfindungsgemäßen Vorrichtung on-line erfaßten Verlauf des Anpreßdruckes, und
- Fig. 9: einen bei Kurzschluß dynamisch erfaßbaren Druckverlauf.

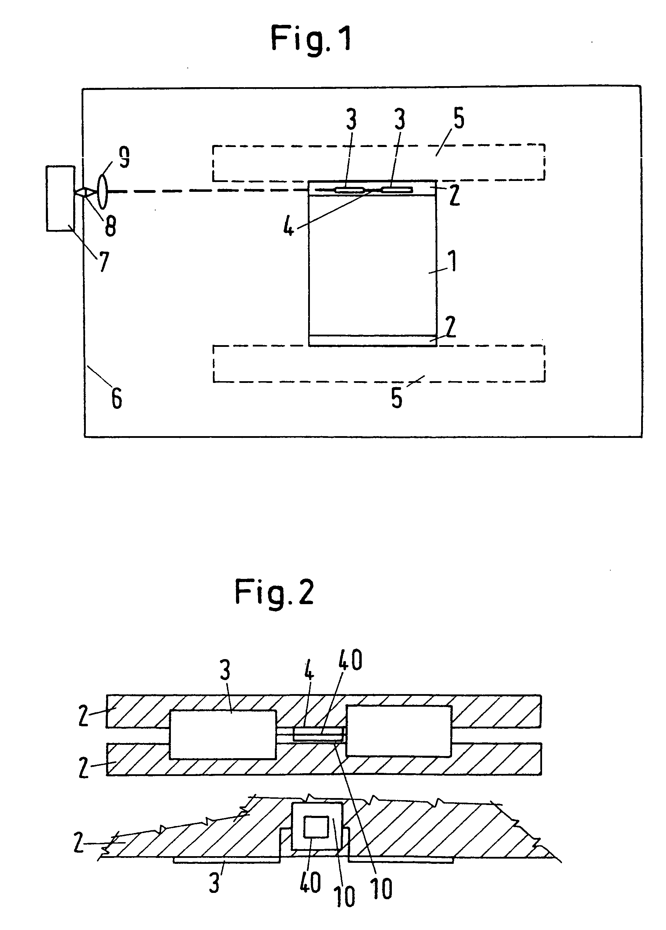

Fig. 1 zeigt eine Prinzipdarstellung einer Anordnung der erfindungsgemäßen Vorrichtung in einem Leistungstransformator. Dabei ist eine von mehreren Wicklungen 1 dargestellt. Innerhalb der Wicklung 1 befindet sich ein in der Zeichnung nicht sichtbarer Schenkel eines Eisenkerns 5. Zwischen dem oberen bzw. unteren Joch des Kerns 5 und der Wicklung 1 sind jeweils Wicklungspreßelemente 2 eingefügt.

Im dargestellten Beispiel ist im Bereich der oberen Preßelemente 2 ein Sensor 4 angeordnet. Es können auch mehrere Sensoren 4 angeordnet sein. Die Anordnung des Sensors 4 erfolgt vorzugsweise auf der dem Kernjoch 5 zugewandten Seite der Preßelemente 2. Geeignet sind je nach Ausführung und Anordnung Sensoren 4, die auf Druck oder Dehnung reagieren.

Der wenigstens eine Sensor 4 ist als drahtloser, d.h., funkabfragbarer Miniatur-Sensor ausgeführt. Das im Sensor 4 enthaltene Sensorelement ist dazu elektrisch mit wenigstens einer Hochfrequenz- oder Mikrowellenantenne verbunden, die als Sensorantenne 3 bezeichnet ist.

Der Kern 5 mit den Wicklungen 1 befindet sich bei einem Leistungstransformator innerhälb eines Tanks 6. Außerhalb des Tanks 6 ist eine Abfrageelektronik 7 angeordnet, an die über eine durch die Wand des Tanks 6 führende Hochfrequenzdurchführung 8 eine Abfrageantenne 9 angeschlossen ist. Die Abfrageantenne 9 und die Sensorantenne 3 sind so angeordnet, daß eine Funkverbindung möglich ist. Die Abfrageelektronik 7 enthält einen Sender und einen Empfänger sowie Steuer- und Überwachungseinrichtungen.

Die durch die Abfrageelektronik 7 in Verbindung mit dem Sensor 4 und den Antennen 3, 9 gebildete Meßvorrichtung kann vorzugsweise in einer OFW-Technik ausgeführt sein und arbeiten, die beispielsweise in den Druckschriften DE-A1-44 13 211 und DE-A1-195 35 543 beschrieben ist.

Die Abkürzung OFW steht für akustische Oberflächenwellen. Die Funkübertragung erfolgt mit Frequenzen im Bereich von 30 MHz bis 3 GHz. OFW-Sensoren enthalten ein dünnes Plättchen aus einem piezoelektrischen Kristall als Sensorelement. Das vom Abfragegerät 7 ausgesandte Hochfrequenzsignal wird von der Antenne 3 des Sensors 4 empfangen und durch einen (Interdigital-)Wandler in eine sich ausbreitende mechanische OFW umgewandelt. Über geeignete reflektierende Strukturen werden die sich ausbreitenden OFW wieder zum Wandler im Sensor 4 reflektiert, wo sie in eine elektromagnetische Welle rückgewandelt und von der Antenne 3 abgestrahlt werden. Bei OFW-Sensoren muß die physikalische Größe, die gemessen werden soll, auf die Eigenschaften der akustischen Oberflächenwelle einwirken. Meistens ändert sich die Ausbreitungsgeschwindigkeit und die Laufstrecke. Mechanische Kräfte wie Verbiegung und Druck ändern sowohl die akustische Weglänge als auch die elastischen Konstanten des Kristalls und damit die OFW-Geschwindigkeit. Ausgewertet werden in der Abfrageelektronik 7 die Laufzeit bzw. Phasenverschiebung, Signalamplitude und Signalform sowie die Verschiebung der Mittenfrequenz bei resonanten Sensoren. Da OFW-Sensoren passive Elemente sind, d.h. auf dem Substrat befinden sich weder Batterien noch aktive elektronische Elemente, eignen sie sich besonders für den langlebigen Einsatz in rauhen Umgebungsbedingungen.

Fig. 2 zeigt eine mögliche Anordnung eines Sensors 4 und zweier damit verbundener Sensorantennen 3. Der Sensor 4 enthält ein als Chip ausgeführtes Sensorelement 40 innerhalb einer hermetisch verschlossenen und elastischen Kapselung 10. Mit der Kapselung 10 wird erreicht, daß das Sensorelement 40 von chemischen Einflüssen, die zu einer Signalverfälschung und Alterungseffekten führen könnten, ferngehalten wird.

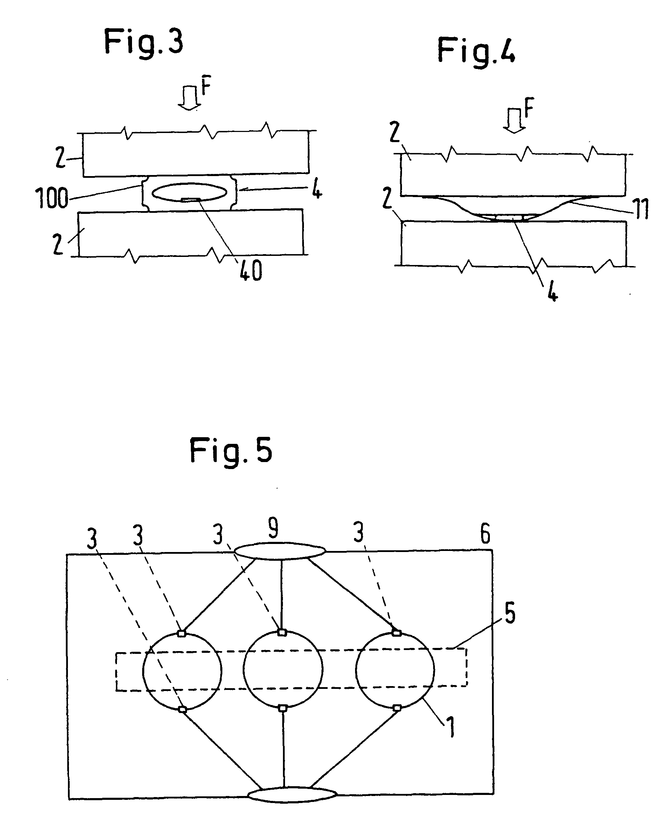

Da die OFW-Sensoren zudem empfindlich auf Dehnungen/Stauchungen ansprechen, ist es vorteilhaft, die Elemente so einzubauen, daß mittels der Gehäuseform eine Druckkraft in eine Dehnung/Stauchung umgewandelt wird. Beispiele für elastisch verformbare Sensoren 4 sind in den Fig. 3 und 4 wiedergegeben.

Fig. 3 zeigt eine Ausführung eines Sensors 4 durch.Anordnung eines Elements 40 innerhalb eines elastischen Verformkörpers 100. Fig. 4 zeigt eine Kombination eines Sensors 4 mit einem Federelement 11.

Fig. 5 zeigt eine mögliche Antennenanordnung, wobei mehrere Sensorantennen 3 mit einer gemeinsamen Abfrageantenne 9 zusammenarbeiten.

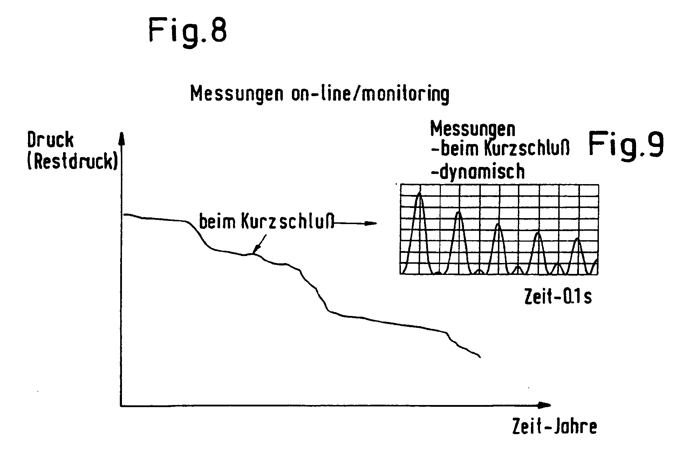

Fig. 8 zeigt ähnlich wie die eingangs erwähnten Fig. 6 und 7 einen Verlauf des Anpreßdrucks in Abhängigkeit von der Zeit, wobei die Erfassung jedoch on-line mittels einer erfindungsgemäßen Anordnung kontinuierlich über mehrere Jahre erfolgt.

Mit derselben Anordnung kann aber auch beispielsweise im Kurzschlußfall eine dynamische Änderung des Anpreßdrucks über einen sehr kurzen Zeitraum, z.B. über 100 ms erfaßt werden, wie in Fig. 9 dargestellt ist.

## Patentansprüche

1. Vorrichtung zur Messung des Anpreßdruckes, der in einem Leistungstransformator oder sonstigem starkstromtechnischem Gerät durch ein Wicklungspreßelement (2) auf eine Wicklung (1) ausgeübt wird, **dadurch gekennzeichnet dass**
a) in das Wicklungspreßelement (2) wenigstens ein Sensor (4) mit einem auf Druck oder Dehnung reagierenden Sensorelement eingesetzt ist, und
b) der Sensor (4) dafür eingerichtet ist, über eine Funkverbindung mit einer Abfrageelektronik (7) zu korrespondieren.

2. Vorrichtung nach Anspruch 1, **dadurch gekennzeichnet, daß** der Sensor (4) elektrisch mit wenigstens einer Sensorantenne (3) verbunden ist.

3. Vorrichtung nach Anspruch 1 oder 2, **dadurch gekennzeichnet, daß** die Abfrageelektronik (7) außerhalb eines Transformatortanks (6), der die Wicklung (1) enthält, angeordnet ist, und mittels einer durch die Wand des Tanks (6) führenden Hochfrequenzdurchführung (8) mit einer Abfrageantenne (9) verbunden ist.

4. Vorrichtung nach Anspruch 3, **dadurch gekennzeichnet, daß** die Kombination von Abfrageelektronik (7) und Sensor (4) dafür eingerichtet ist, ein von der Abfrageelektronik (7) gesendetes Hochfrequenzsignal im Sensor (4) zu empfangen und in eine mechanische Oberflächenwelle umzuwandeln, die sich im Sensor (4) ausbreitet, reflektiert wird, nach Rückwandlung in eine elektromagnetische Welle zur Abfrageelektronik (7) gesendet, dort empfangen und ausgewertet wird.

5. Vorrichtung nach einem der vorstehenden Ansprüche, **dadurch gekennzeichnet, daß** der Sensor (4) ein OFW (akustische Oberflächenwellen)-Sensorelement (40) enthält.

6. Vorrichtung nach einem der vorstehenden Ansprüche, **dadurch gekennzeichnet, daß** der Sensor (4) mittels eines Sensorelements (40) ausgeführt ist, das innerhalb einer hermetischen Kapselung (100) angeordnet ist, die als elastischer Verformungskörper gestaltet ist.

7. Vorrichtung nach einem der Ansprüche 1 bis 5, **dadurch gekennzeichnet, daß** der Sensor (4) in ein Federelement (11) eingefügt ist.

## Claims

1. An apparatus for measuring the contact pressure which is exerted in a power transformer or other power-engineering device by a winding pressing element (2) on a winding (1), **characterized in that**
a) at least one sensor (4) is inserted in the winding pressing element (2), which sensor comprises a sensor element responding to pressure or elongation, and
b) the sensor (4) is arranged to communicate with an electronic interrogation system (7) via a radio link.

2. An apparatus according to claim 1, **characterized in that** the sensor (4) is electrically connected with at least one sensor antenna (3).

3. An apparatus according to claim 1 or 2, **characterized in that** the electronic interrogation system (7) is arranged outside of the transformer tank (6) which contains the winding (1) and is connected with an interrogation antenna (9) by means of a high-frequency bushing (8) leading through the wall of the tank (6).

4. An apparatus according to claim 3, **characterized in that** the combination of electronic interrogation system (7) and sensor (4) is set up to receive a high-frequency signal in the sensor (4) which is sent by the electronic interrogation system (7) and to convert the same into a mechanical surface wave which propagates in the senor (4), is reflected, sent to the electronic interrogation system (7) after reconversion into an electromagnetic wave, is received and evaluated there.

5. An apparatus according to one of the preceding claims, **characterized in that** the sensor (4) comprises an acoustic surface-wave sensor element (40).

6. An apparatus according to one of the preceding claims, **characterized in that** the sensor (4) is arranged by means of a sensor element (40) which is arranged within a hermetic encapsulation (100) which is arranged as an elastic deformation body.

7. An apparatus according to one of the claims 1 to 5, **characterized in that** the sensor (4) is inserted in a spring element (11).

## Revendications

1. Dispositif pour la mesure de la pression d'appui exercée sur l'enroulement (1) dans un transformateur de puissance ou un autre appareil pour courants forts par un élément de compression de l'enroulement (2), **caractérisé en ce que**
a) il est prévu dans l'élément de compression de l'enroulement (2) au moins un capteur (4) avec un élément de capteur réagissant à la pression ou à l'allongement, et
b) le capteur (4) est conçu pour correspondre par une liaison radio avec une électronique d'interrogation (7).

2. Dispositif selon la revendication 1, **caractérisé en ce que** le capteur (4) est connecté électriquement à au moins une antenne de capteur (3).

3. Dispositif selon la revendication 1 ou 2, **caractérisé en ce que** l'électronique d'interrogation (7) est disposée à l'extérieur d'une cuve de transformateur (6) contenant l'enroulement (1) et est reliée au moyen d'au moins une traversée à haute fréquence (8) passant à travers la paroi de la cuve (6) à une antenne d'interrogation (9).

4. Dispositif selon la revendication 3, **caractérisé en ce que** la combinaison de l'électronique d'interrogation (7) et du capteur (4) est conçue pour recevoir un signal à haute fréquence émis par l'électronique d'interrogation (7) dans le capteur (4) et le convertir en onde de surface mécanique qui se propage dans le capteur (4), est réfléchie, émise après avoir été à nouveau convertie en onde électromagnétique vers l'électronique d'interrogation (7), reçue par celle-ci et analysée.

5. Dispositif selon l'une des revendications précédentes, **caractérisé en ce que** le capteur (4) contient un élément de capteur d'ondes acoustiques de surface (40).

6. Dispositif selon l'une des revendications précédentes, **caractérisé en ce que** le capteur (4) est réalisé au moyen d'un élément de capteur (40) qui est disposé à l'intérieur d'une capsule hermétique (100) conformée comme un élément déformable élastique.

7. Dispositif selon l'une des revendications 1 à 5, **caractérisé en ce que** le capteur (4) est introduit dans un élément de ressort (11).
